# EUROPÄISCHE PATENTSCHRIFT

(11) **EP 3 640 409 B1**
(45) Veröffentlichungstag und Bekanntmachung des Hinweises auf die Patenterteilung: **20.04.2022**
(21) Anmeldenummer: 18200548.8
(22) Anmeldetag: 15.10.2018
(51) Int. Cl.: E04F 11/18, B32B 17/10, F21V 33/00, F21Y 115/10

(54) **GELÄNDER MIT EINEM KANTENSCHUTZAUFSATZ**
BALUSTRADE WITH EDGE PROTECTION MEANS
BALUSTRADE AVEC MOYENS DE PROTECTION DES BORDS

(43) Veröffentlichungstag der Anmeldung: 22.04.2020
(73) Patentinhaber: Bangratz, René, 74076 Heilbronn (DE)
(72) Erfinder: Bangratz, René, 74076 Heilbronn (DE)
(74) Vertreter: Wimmer, Stephan

(56) Entgegenhaltungen:
- EP-A1- 3 009 580
- WO-A1-2020/069983
- WO-A2-2005/000577
- DE-A1-102012 009 788
- JP-B2- 3 791 962
- JP-U- S5 589 706

## Beschreibung

Die Erfindung betrifft ein Geländer mit einem Kantenschutzaufsatz zum Schutz einer freien Glaskante.

### Stand der Technik

Glaskonstruktionen wie Ganzglasgeländer nehmen insbesondere bei Brüstungssystemen in der modernen Architektur einen immer größeren Stellenwert ein. Sie bieten größtmögliche Transparenz.

Ein französischer Balkon ist üblicherweise ein Geländer aus Metall oder Glas, das an der Außenseite eines meist bodentiefen Fensters - oder einer Außentür - angebracht wird. In der Regel bieten französische Balkone keine Nutzfläche und sind somit auch keinen richtigen Austritt. Im Vergleich zu klassischen Balkonen ragen französische Balkone also kaum über die Fassade hinaus. Sie kommen als architektonisches Element immer dann zum Einsatz, wenn der Bauherr für mehr Lichteinfall zwar ein bodentiefes Fenster einsetzen, aber keinen Vorbau anbringen möchte. Ein französischer Balkon sorgt für die Sicherheit derartiger bodentiefer Fenster. In der Regel beträgt die Höhe des französischen Balkons mindestens 80 bzw. üblicherweise 90 cm, die meisten Bauordnungen sehen 90 cm bis 1 m vor.

Die Geländer traditioneller französischer Balkone sind aus verschnörkelten schmiedeeisernen Elementen ausgebildet. Die Brüstungen können aber auch aus anderen Materialien, wie Edelstahl oder Glas, ausgebildet sein. Brüstungen aus Glas sind insbesondere aus bruchfestem Sicherheitsglas gefertigt. Ein semitransparentes Material kann als Sichtschutz dienen, ohne Licht zu schlucken. Die Ausbildung aus Glas wird üblicherweise als Ganzglasgeländer bezeichnet.

Ganzglasgeländer zeichnen sich dadurch aus, dass es keine weiteren statisch wirksamen baukonstruktiven Elemente wie Geländerstäbe oder -pfosten gibt. Ganzglasgeländer werden üblicherweise als im Boden verspannte Platten bzw. Glasscheiben aus Sicherheitsglas ausgeführt. Um die Sicherheit der Konstruktion zu gewährleisten, sind die technischen Richtlinien für absturzsichernde Verglasung (TRAV) anzuwenden. Wird kein Bauprodukt mit Regelzulassung verwendet, ist der Nachweis der Einhaltung der TRAV zu erbringen und eine Zustimmung im Einzelfall (ZiE) zu beantragen. Mit der Einführung der DIN 18008 existiert inzwischen eine Grundlage, um eine statische Berechnung von Gläsern durchführen zu können.

Die bekannten Ganzglasgeläder weisen üblicherweise an der Oberseite einen Handlauf auf. Ein Handlauf ist eine Festhalte- und Führungsmöglichkeit für die Hände von Menschen in Griffhöhe. Handläufe sind zumeist in Form von Stangen, Schienen oder Leisten ausgeführt. Gängige Materialien sind Metall, Holz, Holzwerkstoffe oder Kunststoff. Ein Handlauf ist somit der obere Teil eines Geländers oder einer Brüstung. Der Handlauf ist häufig mit einem runden Querschnitt, insbesondere als Metallrohr, ausgebildet.

Bekannt sind Glaskonstruktionen beispielsweise für Ganzglasgeländer, bei denen eine Glasscheibe in einen Profilkörper bzw. einem Tragelement für eine eingespannte Halterung eingebracht ist. Die Halterung ist üblicherweise als U-Profil mit zwei parallel zueinander angeordneten Profilschenkeln ausgebildet. Dies erfolgt insbesondere bei Ganzglasgeländern.

Die EP 1 277 894 B1 offenbart ein eingespanntes Geländer mit einer scheibenförmigen Füllung, insbesondere aus Glas, die einen Handlauf trägt. Die scheibenförmige Füllung ist aus einem mehrschichtigen Glas mit der Bezeichnung VSG (Verbundsicherheitsglas) ausgebildet. Sie trägt oben einen Handlauf und ragt mit einem unteren Randabschnitt in einen Tragkörper, der als Bodenschiene ausgebildet ist.

Nachteilig an den bekannten Handläufen ist, dass diese bei einem Ganzglasgeländer oftmals den optischen Eindruck stören und den leichten und transparenten Eindruck des Glasbauteils durch den Aufsatz von Metallkonstruktionen verändern. Aufgeklebte Edelstahlteile lösen sich auch aufgrund der unterschiedlichen Ausdehnungskoeffizienten häufig von der Glaskonstruktion und müssen daher mechanisch gesichert, also mittels Bohrungen befestigt werden.

Die WO 2020/069983 A1 offenbart eine "Glaskonstruktion für Brüstungs- und/oder Geländerverglasungen oder Glasträger". Es ist ein als Glaslaminat ausgebildetes Verbundelement offenbart, das aus mindestens zwei Glasscheiben besteht, die durch eine klebefähige Zwischenschicht aus Kunststoff verbunden sind. Es ist vorgesehene, dass mindestens eine Kante des Verbundelements einen Kantenschutz aufweist, der zumindest bereichsweise mit den jeweiligen Stirnflächen der mindestens zwei Glasscheiben des Glaslaminats verbunden ist, so dass die Zwischenschicht vor Feuchtigkeitseinflüssen geschützt ist.

Die JP 3 791962 B2 betrifft ein "Plattenglas mit Kantenschutz und seine Herstellung".

Kanten sowohl der Vorder- als auch der Rückseite der Umfangsteile des Flachglases sind abgeschrägt. Der Kantenschutz wird über den abgeschrägten Randteil beider Seiten und die dazwischen liegende Endfläche des Glases durch Verbinden geformt, um die nach außen aus dem Umfangsteil vorstehende Kunstharzschicht des Flachglases zu fixieren. Die Endfläche des Kantenschutzes, die beiden Oberflächen des Flachglases zugewandt ist, ist mit beiden Flächen des Flachglases ausgerichtet. Der Anfaswinkel der Kanten beträgt vorzugsweise 15-45 °. Von beiden Oberflächen des Flachglases beträgt die Fasenbreite vorzugsweise 0,5-2 mm.

Die JP S55 89706 U offenbart ein Geländer gemäß dem Oberbegriff des Anspruchs 1.

Zur Beleuchtung von Balkonen o.dgl. offenbart die DE 20 2007 014 012 U1 ein Beleuchtungsmodul zum Einbauen und Be- bzw. Ausleuchten bzw. Leuchten in und aus rohrförmigen Körpern, wie Treppen- und Balkongeländern, Handläufen, Schildern, Regalen, Gerüsten, Treppenstufen usw.

Aufgabe der Erfindung ist es daher, eine Sicherungskonstruktion für ein Glasbauteil zur Verfügung zu stellen, die einen Aufbau insbesondere eines Ganzglasgeländers ohne

Anbringung eines den transparenten Eindruck störenden Handlaufs als Sicherungselement ermöglicht.

### Offenbarung der Erfindung

Die Erfindung wird durch die Merkmale des Hauptanspruchs offenbart. Ausführungsformen und Weiterbildungen sind Gegenstand der sich an den Hauptanspruch anschließenden weiteren Ansprüche.

Es wird ein Geländer mit einem Kantenschutzaufsatz zum Schutz einer freien Glaskante, insbesondere bei sicherheitsrelevanten Glasbauteilen offenbart, der beispielsweise ein Ganzglasgeländer oder einen französischen Balkon zumindest an seiner in einer aufrechtstehenden Position nach oben, also vom Boden weg zeigenden Oberkante, schützt. Die sicherheitsrelevanten Glasbauteile sind beispielsweise absturzsichernde Verglasungen. Aus optischen Gründen sind Handläufe aus Metall oder Holz, die üblicherweise an den oberen Kanten von französischen Balkonen, Balkon- oder Loggiaverglasungen angeordnet werden, nicht mehr erwünscht. Die Glaskonstruktion insbesondere von Ganzglasgeländern oder französischen Balkonen wird daher transparent ausgebildet und soll nicht durch eine störende Metall-Konstruktion abgeschlossen werden. Es wird jedoch aus Sicherheitsgründen eine Kantenschutzvorrichtung für das Geländer benötigt.

Dabei wird die Verbundglasscheibe der Glaskonstruktion, die aus mindestens einer, insbesondere aus zwei Glasscheiben mit einer dazwischenliegenden Kunststoffschicht bzw. einer Kunststoff-Folie ausgebildet ist, dadurch geschützt, dass erfindungsgemäß ein Kantenschutzaufsatz an mindestens einer freien Kante angebracht wird. In einem Ausführungsbeispiel wird der Kantenschutzaufsatz auf der Oberkante der Glaskonstruktion aufgesetzt. Dieser Kantenschutzaufsatz ist transparent ausgebildet und wird insbesondere auf die Oberkante auflaminiert. Es kann auch eine zusätzliche Laminatfolie zwischen der Oberkante der Glaskonstruktion und dem Kantenschutzaufsatz angeordnet werden oder ein Kleber zum Einsatz kommen.

Es kann auch die zwischen den beiden Glasscheiben der Verbundscheibe der Glaskonstruktion angeordneten Folie so ausgebildet sein, dass sie zur Befestigung des Kantenschutzaufsatzes dienen kann.

Der transparente Kantenschutzaufsatz dient somit als Abdeck-, Schutz- bzw. Verschleißschicht. Durch die Anbringung durch Auflaminierung bildet der transparente Kantenschutzaufsatz mit der zwischen den beiden Glasscheiben der Verbundglasscheibe angeordneten Folie eine Einheit. Es wird eine dauerhafte Verbindung der Glaskonstruktion bzw. des Glasbauteils mit dem Kantenschutzaufsatz gebildet.

Die Verbundglasscheibe kann in einem Tragprofil in einem unteren Bereich gehalten sein, wie beispielsweise bei einem Ganzglasgeländer, einer raumhohen Verglasung oder einer Balkonbrüstung, oder seitlich über der Höhe lagern, punktuell unter Verwendung von Punkt-, Klemm- oder Tellerhaltern gehalten werden, seitlich gehalten werden, wie beispielsweise bei französischen Balkonen, dreiseitig gehalten werden oder auch als Treppenaufgang oder Überkopfverglasung ausgebildet sein.

Der transparente Kantenschutzaufsatz wird aus Glas ausgebildet. Das Glas des Kantenschutzaufsatzes kann, ebenso wie die des Glasbauteils, glasklar, matt, satiniert, farbig o.dgl. ausgebildet sein.

Bei Anwendungen in absturzsichernden Verglasungen, wie beispielsweise Ganzglasgeländern und französischen Balkonen, aber auch raumhohen Verglasungen wird zur Simulation von stoßartigen Belastungen und des daraus resultierenden Bruchverhaltens von Verbundsicherheitsglas der Pendelschlagversuch nach DIN EN 12600 durchgeführt. Zur Prüfung pendelt ein an einem Zugseil hängender 50 kg schwerer Doppelreifen aus einer definierten Fallhöhe gegen eine Glasscheibe des Formats 876 x 1938 mm eingespannt in einen Rahmen. Die Pendelschlagprüfung gilt als bestanden, wenn bei üblicherweise 3 Proben die geprüften Verglasungen entweder nicht oder ungefährlich brechen.

Im Fall der Simulation eines "harten Stoßes" der Einwirkung von herabfallenden Gegenständen relativ geringer Masse und hoher Geschwindigkeit auf eine Glasscheibe wird der Kugelfall-Test nach DIN 52338 durchgeführt. Eine Stahlkugel von 1030 g Gewicht wird auf einen Verbundglasscheiben-Prüfkörper des Formats 500 x 55 mm aus mindestens 4 m Fallhöhe fallen gelassen und darf diesen nicht durchschlagen.

Der erfindungsgemäße Kantenschutzaufsatz hat den Zweck, die Glaskonstruktion neben der geforderten passiven Sicherheit von absturzsichernden Verglasungen auch gegen einen solchen Aufprall, wie er durch den Kugelfall-Test simuliert wird, zu schützen.

Die Glaskonstruktion kann beleuchtet ausgebildet sein. Insbesondere im Tragprofil, in dem die Verbundglasscheibe der Glaskonstruktion angeordnet ist, kann unterhalb der Glasscheibe in einer dazu vorgesehenen Aussparung des Tragprofils ein Leuchtband mit Leuchtmitteln, beispielsweise LED's, angeordnet sein. Dadurch wird die Glaskonstruktion beleuchtet oder mit Lichteffekten versehen. Diese können bei entsprechender Ausgestaltung und Steuerung auch als Notfallbeleuchtung dienen. Das ausgestrahlte Licht wird an der Grenze zwischen der aus dem Tragprofil herausragenden Oberkante der Verbundglasscheibe zum Kantenschutzaufsatz gebrochen und es entstehen dabei wiederum dekorative Lichteffekte. Teile des von den LED's ausgestrahlten Lichts gelangt dabei in den gläsernen Kantenschutzaufsatz, der dadurch ebenfalls mit Lichteffekten versehen wird.

Der erfindungsgemäße Kantenschutzaufsatz hat dabei den Vorteil, dass an der Glaskonstruktion kein optisch störender Handlauf aus Metall, Holz o.dgl. angeordnet werden muss. Die Sicherheit beispielsweise des Ganzglasgeländers auch als Absturzsicherung ist jedoch gewährleistet. Diese Ausführung ermöglicht eine Beleuchtung mit neuartigen Effekten für die Glaskonstruktion mit dem Kantenschutzaufsatz, insbesondere das Ganzglasgeländer bzw. den gesamten fanzösischen Balkon.

Weitere Vorteile und vorteilhafte Ausgestaltungen der Erfindung sind der nachfolgenden Figurenbeschreibung, den Zeichnungen und den Ansprüchen entnehmbar.

Nachfolgend wird ein Ausführungsbeispiel der erfindungsgemäßen Lösung anhand der beigefügten schematischen Zeichnungen näher erläutert. Es zeigen:
- Fig. 1: zeigt eine seitliche Schrägansicht auf ein Tragprofil mit einem Ganzglasgeländer und einem transparenten Kantenschutzaufsatz,
- Fig. 2: zeigt eine Detailansicht mit einem abgefastem transparentem Kantenschutzaufsatz,
- Fig. 3: stellt einen Querschnitt durch eine eingespannte 2-fach-Verglasung dar und
- Fig. 4: zeigt den Querschnitt aus Fig. 3 mit einer Winkelverstellmöglichkeit innerhalb des Tragprofils.

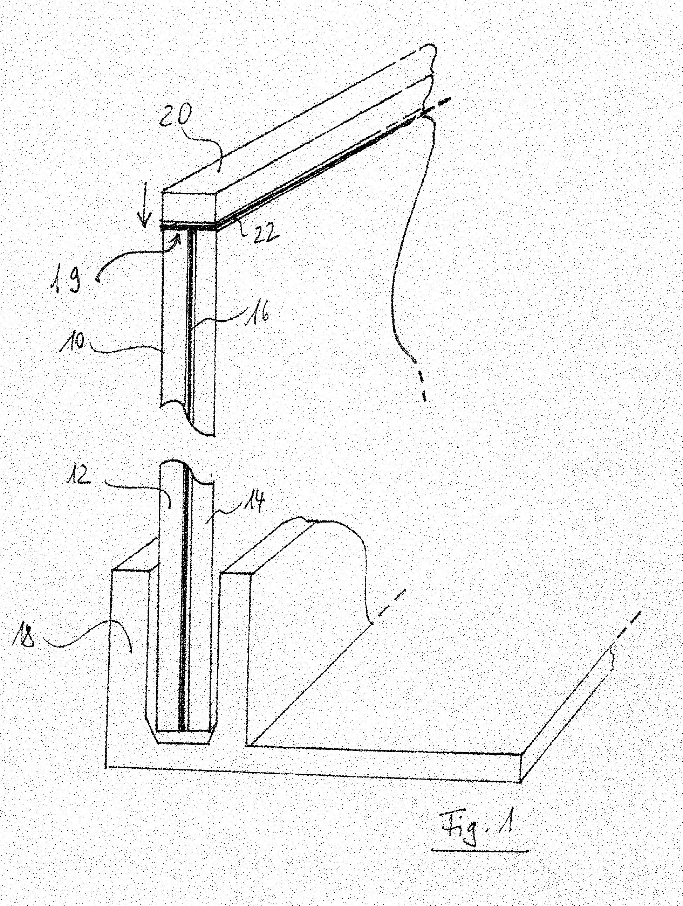

In Fig. 1 ist ein Glasbauteil 10, in diesem Ausführungsbeispiel ein Ganzglasgeländer 10, insbesondere für einen französischen Balkon, ein Balkongeländer, eine Loggiaverglasung o.dgl., dargestellt. Das Ganzglasgeländer 10 weist zwei Glasscheiben 12, 14 auf. Verbund-Sicherheitsglas (VSG) ist üblicherweise aus zwei oder mehreren Glasschichten ausgebildet, die mit hochelastischen, reißfesten Kunststoff-Folien (PVB: Polyvinylburyral, bzw. SGP: Sentryglas plus aus Ionoplast, einem thermoplastischen Kunststoff, der bis zu 5-mal fester und 100-mal steifer als herkömmliche Zwischenschichten ist, oder sonstigen geeigneten Folien) so miteinander verbunden bzw. zusammengeklebt sind, dass bei einem Bruch der Scheiben die Bruchstücke an der Folie haften bleiben. Das mindert das Risiko von Schnitt- oder Stichverletzungen bei Zerstörung der Scheiben und ermöglicht nach dem Bruch eine Resttragfähigkeit der Verbundsicherheitsglas-Einheit. Im vorliegenden Ausführungsbeispiel ist die Verglasung, also das Ganzglasgeländer 10, aus zwei Glasschichten mit der dazwischenliegenden Kunststoff-Folie 16 ausgebildet. Zwischen den Glasscheiben 12, 14 ist die genannte Kunststoff-Folie 16, insbesondere aus SGP, angeordnet. Diese Glasscheiben 12, 14 bilden somit zusammen mit der dazwischen angeordneten Kunststoff-Folie 16 eine 2-fach-Verglasung. Die Glasscheiben 12, 14 sind beispielsweise jeweils oder unterschiedlich kombiniert 6, 8 oder 10 mm stark ausgebildet. Die beiden Glasscheiben 12, 14 mit der dazwischen liegenden Kunststoff-Folie 16 sind vertikal stehend angeordnet und sind in ihrem unteren Bereich in einem U-förmigen Bereich eines Tragprofils 18 klemmend gehalten.

Auf der Oberkante 19 des Ganzglasgeländers 10 ist zum Schutz der freien Glaskante 19 ein Kantenschutzaufsatz 20 angeordnet. Die freie Glaskante 19 ist in diesem Ausführungsbeispiel eine Oberkante 19. Der Kantenschutzaufsatz 20 ersetzt ein ansonsten übliches Bauteil, nämlich einen Handlauf bzw. eine metallene obere Sicherheitsabdeckung derartiger Ganzglasgeländer. Der Kantenschutzaufsatz 20 ist aus einem transparenten Material, nämlich aus Glas ausgebildet. Er wird auf dem Ganzglasgeländer 1 mittels einer Folienschicht auflaminiert. Dazu wird ebenso wie zwischen den Glasscheiben 12, 14 eine weitere transparente Folienschicht 22 aufgebracht oder beispielsweise die bereits vorhandene Folie zwischen den Glasscheiben 12, 14 verwendet. Dies kann während der Produktion erfolgen. Die Folienschicht 22 bzw. die verlängerte, zur Klebung des Kantenschutzprofils 20 geeignet ausgebildete Folie, die als Verlängerung der zwischen den Glasscheiben 12, 14 gebildet ist, kann ebenfalls aus SGP ausgebildet sein. SGP wird, wie oben beschrieben, als Schmelzklebstoff in Form von Zwischenfolien für Verbund-Sicherheitsgläser verwendet. SGP hat eine splitterbindende Wirkung und eine hohe Reißfestigkeit. Da der Ausdehungskoeffizient sowohl des Glasbauteils 10, also des Ganzglasgeländers 10, als auch des aus Glas ausgebildeten Kantenschutzaufsatzes 20 identisch sind, entsteht in dieser Anordnung keine thermische Spannung in dieser Ebene. Die Verbindung ist also schubspannungsfrei. Der Kantenschutzaufsatz 20 kann entweder nur an der Oberkante 19 des Ganzglasgeländers 10 oder aber auch bei Bedarf an allen freien Glaskanten bzw. umlaufend angeordnet werden.

Im Tragprofil 18 des Ganzglasgeländers 10 kann eine Lichtleiste mit Leuchtmitteln, insbesondere LED's, angeordnet werden. Das Tragprofil 18 kann dazu eine Aussparung aufweisen, so dass die Lichtleiste dort angeordnet werden kann. Die LED's können einfarbig oder mehrfarbig ausgebildet und verschiedenartig ansteuerbar sein und so verschiedene Leuchteffekte sowohl für das Ganzglasgeländer 10 als auch den Kantenschutzaufsatz 20 ermöglichen. Die LED-Beleuchtung kann auch als Sicherheitsbeleuchtung ausgebildet sein.

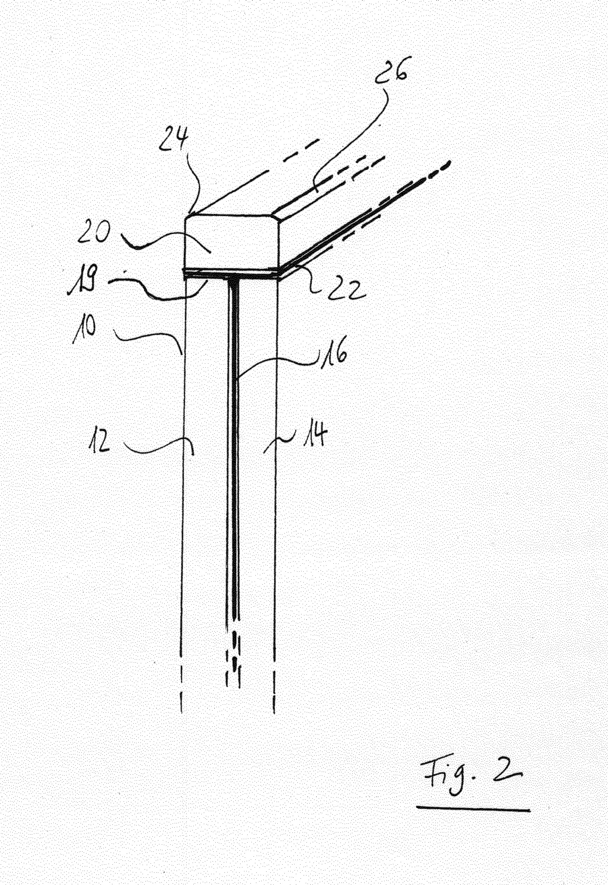

Fig. 2 zeigt eine weitere Ausführungsform des Ganzglasgeländers 10. Dabei ist der Kantenschutzaufsatz 20 mit zwei in Richtung nach oben, weg vom Tragprofil 18 aus Fig. 1,zeigenden, oberhalb der Folienschicht 22 angeordneten Abfasungen, der Fase 24 und 26, ausgebildet. Dies ermöglicht ein angenehmes Greifen des Kantenschutzaufsatzes 20. Es ist auch möglich, den Kantenschutzaufsatz 20 beispielsweise halbkugelförmig abgerundet o.dgl. auszubilden.

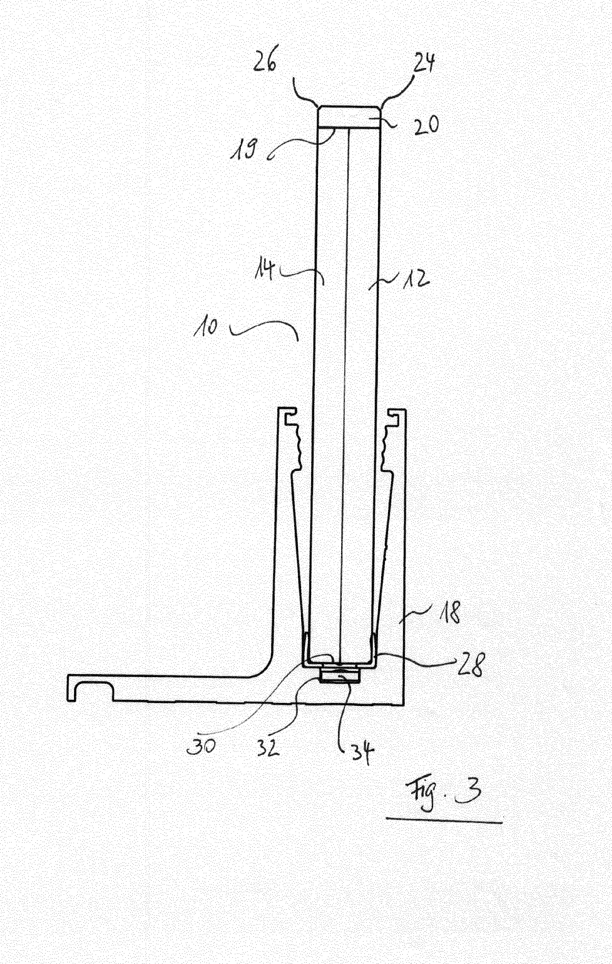

Fig. 3 stellt die 2-fach-Verglasung des Glasbauteils 10, also des Ganzglasgeländers 10, mit den beiden Glasscheiben 12, 14 dar. Die Glasscheiben 12, 14 sind im Tragprofil 18 eingespannt. Auf der Oberkante 19 ist der Kantenschutzaufsatz 20 angeordnet. Der Kantenschutzaufsatz 20 weist eine erste Fase 24 und eine zweite Fase 26 auf. Im Bodenbereich der 2-fach-Verglasung ist innerhalb des Tragprofils ein Gummischuh 28 angeordnet. Der Gummischuh 28 kann eine Lichtdurchlassöffnung 30 aufweisen. Unterhalb des Gummischuhs 28 in Richtung zum Bodenbereich des Tragprofils 18 ist eine Aussparung 32 ausgebildet. In dieser Aussparung 32 ist eine Lichtleiste 34 angeordnet. Die Lichtleiste 34 ist mit Leuchtmitteln, insbesondere LED's, bestückt.

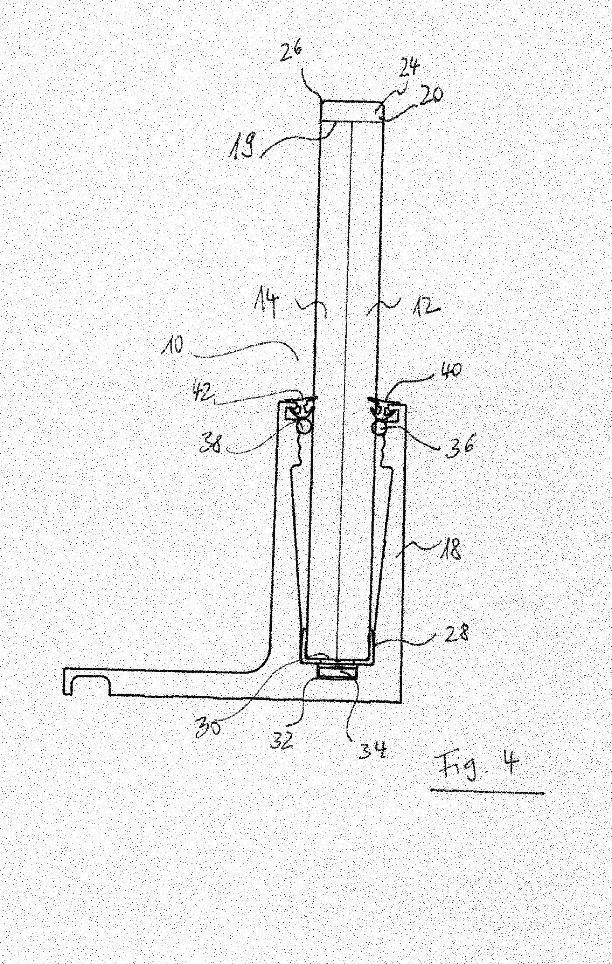

In Fig. 4 sind innerhalb des Tragprofils 18 zur Verstellbarkeit des Ganzglasgeländers 10 beispielhaft angeordnete Rundstäbe 36, 38 dargestellt. Es sind jeweils Dichtungseinrichtungen 40, 42 angeordnet.

### Bezugszeichenliste

- 10: Glasbauteil
- 12: erste Glasscheibe
- 14: zweite Glasscheibe
- 16: Kunststoff-Folie
- 18: Tragprofil
- 19: freie Glaskante
- 20: Kantenschutzaufsatz
- 22: Folienschicht
- 24: erste Fase
- 26: zweite Fase
- 28: Gummischuh
- 30: Lichtdurchlassöffnung
- 32: Aussparung
- 34: Lichtleiste
- 36: Rundstab
- 38: Rundstab
- 40: Dichtungseinrichtung
- 42: Dichtungseinrichtung

## Patentansprüche

1. Geländer, aufweisend sicherheitsrelevante Glasbauteile (10), wobei jedes Glasbauteil (10) mindestens eine Glasscheibe (12) und einen Kantenschutzaufsatz (20) zum Schutz einer freien Glaskante bei sicherheitsrelevanten Glasbauteilen aufweist, wobei der Kantenschutzaufsatz (20) an mindestens einer freien Glaskante (19) des Glasbauteils (10) angeordnet ist,
**dadurch gekennzeichnet, dass** der Kantenschutzaufsatz (20) aus Glas ausgebildet ist, wobei
zwischen der freien Glaskante (19) des Glasbauteils (10) und dem Kantenschutzaufsatz (20) eine Folienschicht (22) ausgebildet ist und der Kantenschutzaufsatz (20) mittels der Folienschicht (22) auf mindestens eine freie Glaskante (19) des Glasbauteils (10) auflaminiert ist.

2. Geländer nach Anspruch 1, **dadurch gekennzeichnet, dass** das Glasbauteil (10) zwei Glasscheiben (12, 14) sowie eine zwischenliegende Kunststoff-Folie (16) aufweist.

3. Geländer nach einem der Ansprüche 1 oder 2, **dadurch gekennzeichnet, dass** es ein Ganzglasgeländer oder ein französischer Balkon ist.

4. Geländer nach einem der vorhergehenden Ansprüche, **dadurch gekennzeichnet, dass** der Kantenschutzaufsatz (20) mindestens eine Fase (24, 26) aufweist.

5. Geländer nach einem der vorhergehenden Ansprüche, **dadurch gekennzeichnet, dass** der Kantenschutzaufsatz (20) umlaufend an dem Glasbauteil (10) angeordnet ist.

6. Geländer nach einem der vorhergehenden Ansprüche 1 bis 4, **dadurch gekennzeichnet, dass** der Kantenschutzaufsatz (20) an mindestens einer Seitenkante des Glasbauteils (10) angeordnet ist.

7. Geländer nach einem der vorhergehenden Ansprüche, **dadurch gekennzeichnet, dass** die freie Glaskante (19) eine Oberkante (19) des als Ganzglasgeländer ausgebildeten Geländers bildet und dass das Ganzglasgeländer in einem U-förmig ausgebildeten Bereich eines Tragprofils (18) gespannt gehalten ist.

8. Geländer nach Anspruch 7, **dadurch gekennzeichnet, dass** am Tragprofil (18) ein Leuchtband angeordnet ist, das Leuchtmittel aufweist.

9. Geländer nach Anspruch 8, **dadurch gekennzeichnet, dass** die Leuchtmittel LED's sind.

10. Geländer nach einem der vorhergehenden Ansprüche, **dadurch gekennzeichnet, dass** der Querschnitt des Kantenschutzaufsatzes (20) quadratisch, quaderförmig, dreieckig, trapezoid, vieleckig, halbrund, ellipsoid oder nahezu rund mit einer Abflachung, die als Aufsatzfläche auf die freie Glaskante (19) dient, ausgebildet ist.

## Claims

1. A balustrade comprising safety-relevant glass components (10), wherein each glass component (10) comprises at least one glass pane (12) and an edge protection attachment (20) for protecting a free glass edge of safety-relevant glass components, wherein the edge protection attachment (20) is arranged on at least one free glass edge (19) of the glass component (10),
**characterised in that** the edge protection attachment (20) is formed from glass, wherein a film layer (22) is formed between the free glass edge (19) of the glass component (10) and the edge protection attachment (20), and the edge protection attachment (20) is laminated by means of the film layer (22) onto at least one free glass edge (19) of the glass component (10).

2. The balustrade according to claim 1, **characterised in that** the glass component (10) comprises two glass panes (12, 14) and an intermediate plastics film (16).

3. The balustrade according to one of claims 1 or 2, **characterised in that** it is an all-glass balustrade or a French balcony.

4. The balustrade according to one of the preceding claims, **characterised in that** the edge protection attachment (20) has at least one chamfer (24, 26).

5. The balustrade according to one of the preceding claims, **characterised in that** the edge protection attachment (20) is arranged circumferentially on the glass component (10).

6. The balustrade according to one of preceding claims 1 to 4, **characterised in that** the edge protection attachment (20) is arranged on at least one side edge of the glass component (10).

7. The balustrade according to one of the preceding claims, **characterised in that** the free glass edge (19) forms an upper edge (19) of the balustrade formed as an all-glass balustrade, and **in that** the all-glass balustrade is held clamped in a U-shaped region of a supporting profile (18).

8. The balustrade according to claim 7, **characterised in that** a luminous band is arranged on the supporting profile (18) and comprises illuminants.

9. The balustrade according to claim 8, **characterised in that** the illuminants are LEDs.

10. The balustrade according to one of the preceding claims, **characterised in that** the cross-section of the edge protection attachment (20) is square, rectangular, trapezoidal, polygonal, semi-circular, ellipsoidal, or near-round with a flattened portion which serves as a face for attachment onto the free glass edge (19).

## Revendications

1. Garde-corps, présentant des composants en verre (10) importants en matière de sécurité, dans lequel chaque composant en verre (10) présente au moins une vitre en verre (12) et un chapeau de protection de bord (20) pour protéger un bord en verre libre dans des composants en verre importants en matière de sécurité, dans lequel le chapeau de protection de bord (20) est disposé sur au moins un bord en verre libre (19) du composant en verre (10),
**caractérisé en ce que** le chapeau de protection de bord (20) est réalisé en verre, dans lequel une couche de film (22) est réalisée entre le bord en verre libre (19) du composant en verre (10) et le chapeau de protection de bord (20), et le chapeau de protection de bord (20) est appliqué par laminage au moyen de la couche de film (22) sur au moins un bord en verre libre (19) du composant en verre (10).

2. Garde-corps selon la revendication 1, **caractérisé en ce que** le composant en verre (10) présente deux vitres en verre (12, 14) ainsi qu'un film en matière plastique (16) intercalé.

3. Garde-corps selon l'une quelconque des revendications 1 ou 2, **caractérisé en ce qu'**il est un garde-corps tout en verre ou un balcon français.

4. Garde-corps selon l'une quelconque des revendications précédentes, **caractérisé en ce que** le chapeau de protection de bord (20) présente au moins un biseau (24, 26).

5. Garde-corps selon l'une quelconque des revendications précédentes, **caractérisé en ce que** le chapeau de protection de bord (20) est disposé en périphérie sur le composant en verre (10).

6. Garde-corps selon l'une quelconque des revendications 1 à 4, **caractérisé en ce que** le chapeau de protection de bord (20) est disposé sur au moins un bord latéral du composant en verre (10).

7. Garde-corps selon l'une quelconque des revendications précédentes, **caractérisé en ce que** le bord en verre libre (19) forme un bord supérieur (19) du garde-corps réalisé en tant que garde-corps tout en verre, et que le garde-corps tout en verre est maintenu de manière serrée dans une zone, réalisée en forme de U, d'un profil de support (18).

8. Garde-corps selon la revendication 7, **caractérisé en ce qu'**est disposée, sur le profil de support (18), une bande lumineuse, qui présente des moyens d'éclairage.

9. Garde-corps selon la revendication 8, **caractérisé en ce que** les moyens lumineux sont des DEL.

10. Garde-corps selon l'une quelconque des revendications précédentes, **caractérisé en ce que** la section transversale du chapeau de protection de bord (20) est réalisée de manière quadratique, en forme de carré, de manière triangulaire, de manière trapézoïdale, de manière polygonale, en demi-cercle, de manière ellipsoïdale ou de manière quasiment ronde avec une zone aplatie, qui sert de surface d'appui sur le bord en verre libre (19).
